# EUROPEAN PATENT APPLICATION

(11) **EP 1 376 475 A2**
(43) Date of publication of application: **02.01.2004**
(21) Application number: 03076845.1
(22) Date of filing: 13.06.2003
(51) Int. Cl.: G06T 17/00

(54) **Apparatus and method of modifying a portrait image**

(30) Priority: 25.06.2002 US 179435
(71) Applicant: EASTMAN KODAK COMPANY, Rochester, New York 14650 (US)
(72) Inventor: Squilla, John R., Eastman Kodak Company, Rochester, New York 14650-2201 (US); Simon, Richard A., Eastman Kodak Company, Rochester, New York 14650-2201 (US); McIntyre, Dale F., Eastman Kodak Company, Rochester, New York 14650-2201 (US)
(74) Representative: Haile, Helen Cynthia

(57) **Abstract**

An apparatus and method of modifying a portrait image. The method comprises providing a digital still image comprising the portrait image; generating an image model of the portrait image; providing a plurality of modified portrait images generated by applying a plurality of pre-defined modifications to the image model; displaying the plurality of modified portrait images; providing an indicator for selecting at least one of the plurality of displayed modified portrait images; and displaying, transferring, storing, or printing the at least one selected modified portrait image.

## Description

The present invention relates generally to the field of photography, and more particularly, to modifying a portrait image.

Both professional photographers and amateur photographers struggle to coax a pleasing expression from a person whose photograph they are taking. In some situations, there is success to the struggle. In other situations, there is no success and the photographer experiences disappointment. If there are several individuals in the photograph, there is an even greater struggle for success since the photographer must coax a pleasing expression simultaneously from every individual in the photograph. As such, for group photographs, success may occur less frequently.

For a photographer at a professional photo studio, the amount of time spent taking the photographs is a key factor in the profitability of the photo studio. That is, the longer the session with the photographer, the fewer photo sessions which can be arranged. Further, once a particular pose is staged and a photo taken, it is very time consuming to get that particular pose set up again. This situation can occur when the customer desires to repeat a photo sessions, for example, when the customer making the purchase was not present during the photo session (i.e., proofs at a photo studio where the parents are not present, or school portraits taken at school). This situation is costly and time consuming to the photographer, and time consuming and potentially disappointing for the customer.

In an attempt to address this problem, the photographer takes many photographs/images using photosensitive film, hoping for success with at least one of the photographs.

In another attempt to address the problem, the photographer uses a digital imaging system to capture images in a digital format. A digital camera is an example of a digital imaging system. Digital imaging systems can provide immediate feedback for the customer. However, even if many digital images are captured, there is no guarantee of success since the pleasing expression may not have been coaxed from the subject or the subject may not have been cooperative. For example, an 18 month old child is not always cooperative when a photograph is being taken. Further, if there are several individuals in the photograph, the pleasing expression may not have been coaxed simultaneously from every individual in the photograph.

In still a further attempt to address the problem, digital retouching tools can be used to modify the image once it is in a digital format. Known digital retouching tools include Adobe PhotoShop. However, retouching an image requires a person/artist who is highly skilled and knowledgeable in the use of the retouching tools so as to not provide an image that appears to be retouched. In addition, use of the retouching tools can be time consuming, adding cost/time to the process. Further, since the digital retouching tools focus on specific sections (i.e., a pixel by pixel modification) of the image rather than the image as a whole, modifications to the image do not provide a realistic result. That is, one aspect of the face cannot be modified unless other aspects are also modified, else the results may be unnatural or unrealistic. For example, assume it is desired to change a frown to a smile in a facial image. In retouching the portrait/facial image, the digital retouching may change the mouth expression from a "frown" to a "smile", but the corresponding cheeks and eye expression is still a "frown", and not the desired "smile". So while the pixels may have been changed, the particular modifications to the image did not provide a realistic result. Accordingly, digital retouching tools are not suited for use in modifying a portrait/facial image.

Accordingly, a need continues to exist for an apparatus and method for modifying a facial image. Such a method would allow a modification of portions of or all of a portrait image, particularly a facial image. Further, it is desirable to accomplish such a method in a semi-automated or automated manner wherein a minimum of photographs are required and a minimum of time is required to view the resulting modified image. Yet further, such a method would preferably be accomplished by an individual not highly skilled in the digital manipulation of images, including the amateur photographer working on a home computer or within a camera. The method should permit the customer to view, modify, and optimize the facial image. Preferably, such a method would be accomplished remotely so that customers in different locations can be involved simultaneously. The apparatus would be configured to accomplish the method, whether in a home or in a professional environment.

An object of the present invention is to provide an apparatus and method for modifying a portrait image, in particular, a facial image.

Another object of the invention is to provide such an apparatus and method wherein portions of or all of the portrait image can be modified.

Still another object of the invention is to provide such an apparatus and method which is semi-automated or automated.

Yet another object of the invention is to provide such an apparatus and method which can be employed in a home or professional environment, including on a personal computer, kiosk, or camera.

Still a further object of the invention is to provide such an apparatus and method which can be accomplished remotely.

These objects are given only by way of illustrative example. Thus, other desirable objectives and advantages inherently achieved by the disclosed invention may occur or become apparent to those skilled in the art. The invention is defined by the appended claims.

According to one aspect of the invention, there is provided a method of modifying a portrait image. The method comprises providing a digital still image comprising the portrait image; generating an image model of the portrait image; providing a plurality of modified portrait images generated by applying a plurality of pre-defined modifications to the image model; displaying the plurality of modified portrait images; providing an indicator for selecting at least one of the plurality of displayed modified portrait images; and displaying, transferring, storing, or printing the at least one selected modified portrait image.

According to another aspect of the invention, there is provided a method of modifying a portrait image comprising the steps of: providing a digital still image comprising the portrait image; generating an image model of the portrait image; providing a plurality of pre-defined modifications; providing a selection indicator for indicating the selection of at least one of the plurality of pre-defined modifications; applying the selected at least one pre-defined modification to the image model to generate a modified portrait image; and displaying, transferring, storing, or printing the modified portrait image.

According to yet another aspect of the invention, there is provided a method of modifying a portrait image comprising the steps of: providing at least one digital still image comprising a plurality of portrait images; generating a three-dimensional image model using the plurality of portrait images; providing a plurality of pre-defined modifications; displaying the plurality of pre-defined modifications; providing an indicator for selecting at least one of the displayed plurality of pre-defined modifications; applying the selected at least one pre-defined modification to the three-dimensional image model to generate a three-dimensional modified portrait image; and displaying, transferring, storing, or printing the at least one three-dimensional modified portrait image.

According to still yet another aspect of the invention, there is provided a method of modifying a portrait image comprising the steps of: providing a digital still image comprising the portrait image; generating an image model of the portrait image; displaying a plurality of pre-defined modifications; selecting one of the displayed plurality of pre-defined modifications; applying the selected one pre-defined modification to the image model to generate a modified portrait image; displaying the modified portrait image; modifying the modified portrait image to generate a refined modified portrait image; and displaying, transferring, storing, or printing the refined modified portrait image.

According to a further aspect of the invention, there is provided a method of modifying a portrait image comprising the steps of: providing a digital still image comprising the portrait image; generating an image model of the portrait image; displaying a first plurality of modified portrait images generated using the image model; providing an indicator for selecting one of the first plurality of modified portrait images; displaying the selected one of the first plurality of modified portrait images; displaying a second plurality of modified portrait images generated using the image model; providing an indicator for selecting one of the second plurality of modified portrait images; displaying the selected one of the second plurality of modified portrait images; providing an acceptance indicator for indicating acceptance of the selected one of the second plurality of modified portrait images; and replacing the portrait image with the selected one of the second plurality of modified portrait images to generate a modified digital still image.

According to a further aspect of the invention, there is provided an image processing system, comprising: an image capture device adapted to provide a digital still image of a portrait image; an image processing unit for generating an image model of the portrait image and providing a plurality of pre-defined modifications; a display for displaying the plurality of pre-defined modifications; a selection indicator adapted for indicating the selection of one of the plurality of pre-defined modifications; and a processing member for applying the selected one pre-defined modification to the image model to generate a modified portrait image and replace the portrait image of the digital still image with the modified portrait image to generate a modified digital still image.

According to a further aspect of the invention, there is provided an image capture device, comprising: means for providing a digital still image comprising a portrait image; means for generating an image model of the portrait image; means for displaying a plurality of modified portrait images; means for selecting one of the plurality of modified portrait images; and image processing means for replacing the portrait image with the selected one of the plurality of modified portrait images to generate a modified digital still image.

According to still another aspect of the invention, there is provided an image producing kiosk, comprising: means for providing a digital still image comprising a portrait image; means for generating an image model of the portrait image; means for displaying a plurality of modified portrait images; means for selecting one of the plurality of modified portrait images; and image processing means for replacing the portrait image with the selected one of the plurality of modified portrait images to generate a modified digital still image.

According to a still further aspect of the invention, there is provided a method of processing a digital still image, comprising the steps of: providing a digital still image comprising the portrait image; generating a hardcopy output comprising the portrait image and a plurality of candidate modified portrait images generated using an image model of the portrait image; providing the hardcopy output to a user; accepting instructions from the user representative of acceptance of at least one of the plurality of candidate modified portrait images; and generating a modified digital still image comprising the accepted at least one of the plurality of candidate modified portrait images.

According to a still further aspect of the invention, there is provided a method of processing a digital still image, comprising the steps of: capturing, at a first location, a digital still image comprising the portrait image; generating a hardcopy output displaying the portrait image disposed proximately to a plurality of candidate modified portrait images generated using an image model of the portrait image; providing the hardcopy output to a user disposed at a second location remote from the first location; accepting instructions from the user representative of acceptance of at least one of the plurality of candidate modified portrait images; generating a modified digital still image comprising the accepted at least one of the plurality of candidate modified portrait images; and providing the modified digital still image to the user.

According to a still further aspect of the invention, there is provided a method of processing a digital still image, comprising the steps of: capturing, at a predetermined location, a digital still image comprising the portrait image; displaying to a user, on a display located at the predetermined location, the portrait image disposed proximately to a plurality of candidate modified portrait images generated using an image model of the portrait image; accepting instructions from the user representative of selection of at least one of the plurality of candidate modified portrait images; generating a modified digital still image comprising the accepted at least one of the plurality of candidate modified portrait images; and providing the modified digital still image to the user.

According to a still further aspect of the invention, there is provided a method of processing a digital still image, comprising the steps of: capturing, at a predetermined location, a digital still image comprising the portrait image; providing a user with an identifier associated with the portrait image; accessing the portrait image with the associated identifier using a display located at a second location remote from the predetermined location; displaying to a user, on the display, the portrait image disposed proximate a plurality of candidate modified portrait images generated using an image model of the portrait image; accepting instructions from the user representative of a selection of at least one of the plurality of candidate modified portrait images; generating a modified digital still image comprising the accepted at least one of the plurality of candidate modified portrait images; and providing the modified digital still image to the user.

According to a still further aspect of the invention, there is provided a method of processing a digital still image, comprising the steps of: capturing, at a predetermined location, a digital still image comprising the portrait image; providing a user with an identifier associated with the portrait image; accessing, at a second location remote from the predetermined location, the portrait image with the associated identifier using an imaging device; transferring a digital file of the portrait image to the imaging device; using software disposed on the imaging device to generate a plurality of candidate modified portrait images; displaying, using the imaging device, the portrait image disposed proximately to the plurality of candidate modified portrait images; accepting instructions representative of a selection of at least one of the plurality of candidate modified portrait images; and generating a modified digital still image comprising the accepted at least one of the plurality of candidate modified portrait images.

According to a yet another aspect of the invention, there is provided a method of processing a digital still image, comprising the steps of capturing, at a first location, a digital still image comprising the portrait image; generating, at the first location, an image model of the portrait image; providing a user with an identifier associated with the portrait image; accessing, at a second location remote from the first location, the portrait image and image model using an imaging device; transferring the portrait image and the image model to the imaging device; using software disposed on the imaging device to generate a plurality of candidate modified portrait images using the image model; displaying, using the imaging device, the portrait image disposed proximate the plurality of candidate modified portrait images; accepting instructions representative of a selection of one of the plurality of candidate modified portrait images; and generating a modified digital still image by replacing the portrait image with the accepted one of the plurality of candidate modified portrait images.

According to a still further aspect of the invention, there is provided a method of processing a digital still image, comprising the steps of: capturing, at a predetermined location, a digital still image comprising the portrait image; providing a user with an identifier associated with the portrait image; accessing, at the predetermined location, the portrait image with the associated identifier using an imaging device; transferring a digital file of the portrait image to the imaging device; using software disposed on the imaging device to generate a plurality of candidate modified portrait images; displaying, using the imaging device, the portrait image disposed proximately to the plurality of candidate modified portrait images; accepting instructions representative of a selection of at least one of the plurality of candidate modified portrait images; and generating a modified digital still image comprising the accepted at least one of the plurality of candidate modified portrait images.

The present invention provides a method for modifying a portrait image wherein portions of or all of the portrait image can be modified. The method can be semi-automated or automated, can be conducted in a home or professional environment, on a kiosk, personal computer or a camera, and can be accomplished remotely.

The foregoing and other objects, features, and advantages of the invention will be apparent from the following more particular description of the preferred embodiments of the invention, as illustrated in the accompanying drawings.
FIG. 1 shows a flow diagram illustrating a method in accordance with a first embodiment of the present invention.
FIG. 2 shows a first portrait image.
FIG. 3 shows a digital still image comprising the first portrait image of FIG. 2.
FIG. 4 shows an isometric view of a 2.5 dimensional image model of the first portrait image of FIG. 2.
FIG. 5 shows a wire frame model which is the basis of the image model of FIG. 4.
FIG. 6 shows a plurality of modified portrait images.
FIG. 7 shows a list of pre-defined modifications.
FIG. 8 shows a ring-around arrangement for displaying a plurality of modified portrait images.
FIGS. 9(a)-9(b) show various arrangements for displaying the pre-defined modifications and/or modified portrait images.
FIG. 10 shows a camera arrangement for capturing a plurality of portrait images to generate a 3-dimensional image model of the portrait image.
FIG. 11 shows a flow diagram illustrating a method in accordance with a second embodiment of the present invention.
FIG. 12 shows a flow diagram illustrating a method in accordance with a third embodiment of the present invention.
FIG. 13 shows a schematic generally illustrating a method in accordance with a third embodiment of the present invention.
FIG. 14 shows a flow diagram illustrating the method of FIG. 13.
FIG. 15 shows a flow diagram illustrating a method in accordance with a fourth embodiment of the present invention.
FIG. 16 shows a schematic generally illustrating the method of FIG. 15.
FIG. 17 shows a flow diagram of a further embodiment in accordance with the present invention.

The following is a detailed description of the preferred embodiments of the invention, reference being made to the drawings in which the same reference numerals identify the same elements of structure in each of the several figures.

For purposes of the present application, the term "portrait" or "portrait image" refers to a likeness of a person or animal, especially one showing the face, as of a painting, drawing, photograph, rendering or the like. A rendering can take the form of a cartoon or be artificially generated, such as by means of a computer. As such, the term "portrait" encompasses an image comprising a representation of one or more faces, including human/person or animal. The term further comprises any/all related elements, for example, portrait effects, accessory, and/or features, such as a hat, hair, gloves, glasses, or the like.

Also, for purposes of the present application, the term "modification" refers to any change which could occur to the portrait, including, but not limited to a change in expression, emotion, facial features (ex: blue eyes to green eyes, or brunette to blond), age (e.g., younger and older), weight (e.g., loss and gain), hair (e.g., loss and gain), texture (including texturing of skin and color), lighting, and pose (e.g., movement, for example, changing from a frontal view to a side view). Accordingly, a modification can comprise a change in expression (for example, several different smiles of happiness), and a change in emotion (for example, happiness, joy, sorrow, hate). A modification can further comprise a change resulting from weight loss, weight gain, aging, and youth rejuvenation. Still further a modification can comprise a change in a facial feature, for example, blue eyes to green eyes, blond to brunette. Yet further, changes in head size/shape, eye size/shape, nose size/shape, ear size/shape, and lip size/shape. Yet still further, a modification can comprise a tilt, rotation, or other movement of the facial image. Modification may also comprise clothing color change, as it may be desired to better match the background or compliment the clothing of another person. Modification may also comprise an accessory change, for example, a change in hat color, or the addition/removal of jewelry or glasses.

The present invention provides an apparatus and method of modifying a portrait image, and employs the field of animation. Preferably, the present invention provides an apparatus and method of modifying a portrait image of a person, although the present invention may be extended to other portrait images, such as dogs, cats, and cartoon characters.

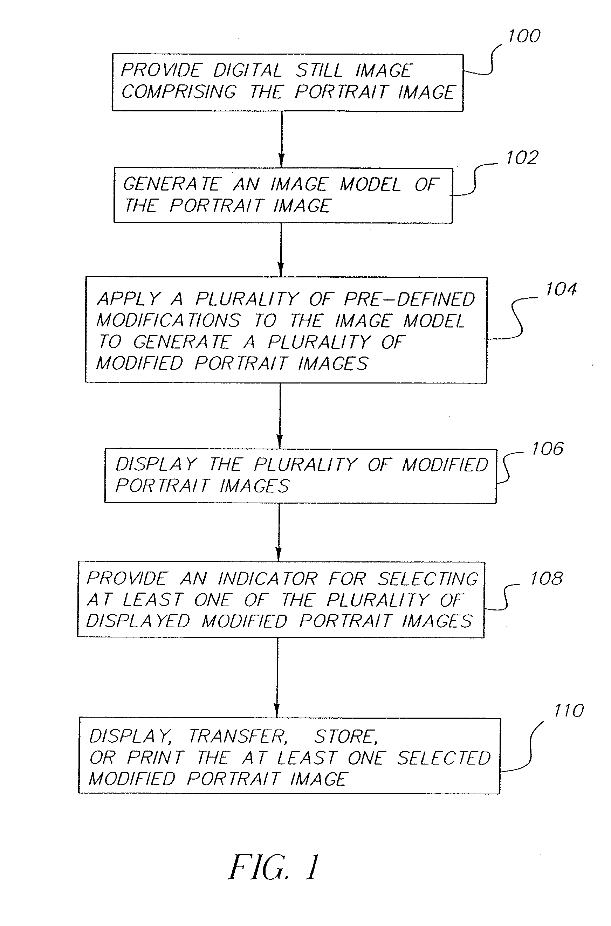

A flow diagram of a method in accordance with a first embodiment of the present invention is shown in Figure 1, with each of the steps illustrated in Figure 1 being more particularly described below. As illustrated in Figure 1, a digital still image comprising a portrait image is first provided (step 100). Once provided, an image model of the portrait image is generated (step 102). A plurality of pre-defined modifications is applied to the image model to generate a plurality of modified portrait images (step 104). As will be hereafter described in more detail, the plurality of pre-defined modifications can be provided my several methods, for example, by means of a database. The plurality of modified portrait images are displayed (step 106). One of the plurality of modified portrait images is selected using an indictor (step 108). The selected modified portrait image can then be displayed, transferred, stored or printed (step 111). For example, if a print out of the resulting modified portrait image is desired, a print may be made using a printer, such as a digital silver halide printer, thermal printer, ink jet printer, electrophotographic printer, and the like. Similarly, if the resulting modified portrait image is to be stored, it may be stored in an electronic format.

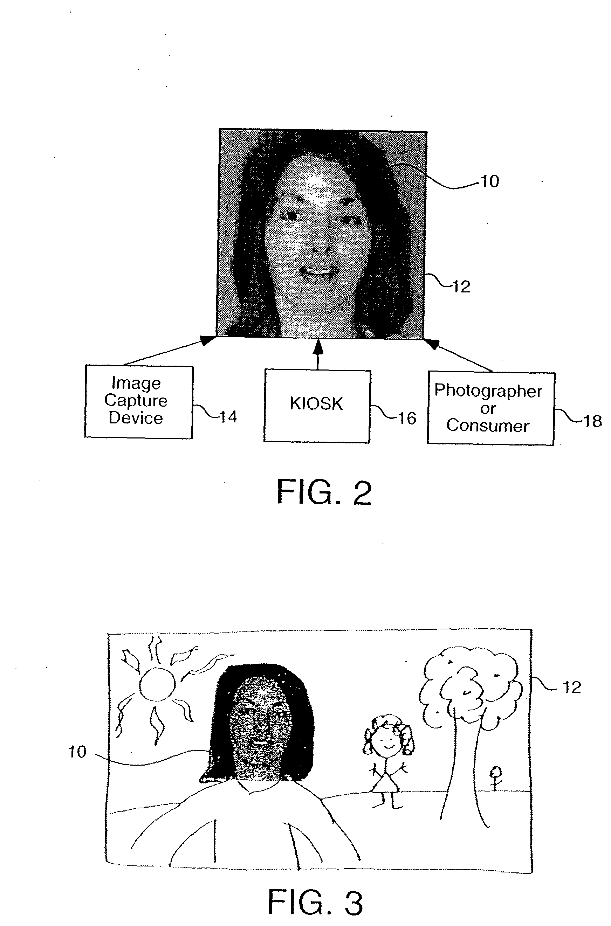

An example of a digital still image 12 is illustrated in Figure 2 as comprising a first portrait image 10. As shown in Figure 2, first portrait image 10 includes a frontal view of a person's face, with the person being a sole subject of digital still image 12.

Still referring to Figure 2, digital still image 12 can be provided using known methods/techniques, for example, an image capture device 14, an imaging producing kiosk 16, or a photographer/consumer 18.

Digital still image 12 can be captured using image capture device 14. Known image capture devices include photographic film cameras, digital cameras, digital video recorders, and camcorders. If image capture device 14 is a device which captures the image in digital form, such as a digital camera, first portrait image 10 of digital still image 12 is provided in a digital form, and is stored digitally such as on a floppy disk, memory card, or the like. If image capture device 14 is a photographic film camera, the image is a photographic print captured on photographic paper. Accordingly, the image could be converted to a digital still image (i.e., digital form) using a scanner or other device for converting the image for storage in digital form and generating a digital still image of the photographic print.

Image producing kiosk 16, such as a Picture Maker by Eastman Kodak Company, may include an image capture device for capturing images, or the capturing of an image using an image capture device could be accomplished by the professional photographer at a photo studio or an amateur photographer 18, such as a consumer. An image captured by photographer 18 can be transferred to kiosk 16 using a digital reader (if the image is in digital form) or a scanner (if the image is a photographic print) to convert the photographic print to a digital still image.

Alternatively, all of or portions of first portrait image 10 can be extracted from digital still image 12 using known methods. For example, as shown in Figure 3, first portrait image 10 is one of a plurality of subjects in digital still image 12. More particularly, digital still image 12 includes a portrait portion (i.e., first portrait image 10) and a non-portrait portion For the particular example of Figure 3, the non-portrait portion of digital still image 12 includes a flower, a tree, the sun, grass, sky and another person. Known processing methods, such as zoom and crop, can be used to extract first portrait image 10 from digital still image 12. Adobe PhotoShop is an example of a software tool which may be suitable to extract first portrait image 10 from digital still image 12. Chroma-key technology can also be employed for extracting first portrait image 10 from digital still image 12.

In capturing first portrait image 10, a threshold level of resolution may be required to generate a realistic image model of the portrait image at step 102. This threshold level of resolution may be defined/identified by those skilled in the art of facial animation, and may be dependent on the technique used to generate the model.

On providing first portrait image 10 in a digital format, an image model of first portrait image 10 is generated at step 102 using methods known to those skilled in the art. "Synthesizing Realistic Facial Expressions from Photographs", by Pighin et al, SIGGRAPH 98, Computer Graphics Proceedings, Annual Conference Series, 1998, Pages 75-83 discloses a technique of modeling a facial image and providing smooth transitions between facial expressions. LifeFX, Inc. has developed a tool called Facemail for delivering animated email messages (refer to "You've Got Face!", Time, April 2, 2001, page 77. As such, LifeFX utilizes a model of a facial image. Another example is described in "A Morphable Model for the Synthesis of 3D Faces", Volker Blanz and Thomas Vetter, Max Planck Institute, SIGGRAPH Computer Graphics Proceedings, Annual Conference Series, 1999, pp 187-194.

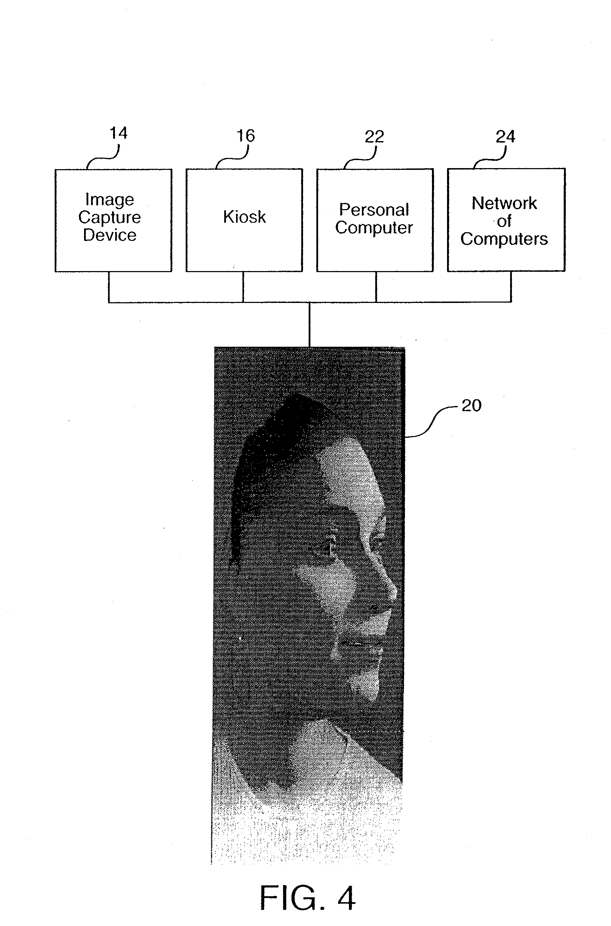

An example of an image model generated from a portrait image is illustrated in Figure 4 as image model 20. For ease of explanation, Figure 4 is shown in an isometric view. As illustrated, image model 20 is a 2.5 dimensional (i.e., a two and one half dimensional) model. That is, since the model was generated using a planar (i.e., 2-dimensional) image, a 3-dimensional model could not be generated since the exact information on parts of the head that are not in the photograph could not be determined. However, a partial model could be created from the planar image which provides for limited movement of the portrait image yet contains more than 2 dimensions of information. The model is therefore referred to as a 2.5 dimensional model. However, as known to those skilled in the art, multiple images can be combined to generate a full 3-dimensional model.

The generation of image model 20 can be accomplished by image capture device 14 if image capture device 14 includes an image processing unit. Image producing kiosk 16 could also produce image model 20. Alternatively, image model 20 could be generated by at least one personal computer 22, using a communications network, by a network of computers 24, or the like.

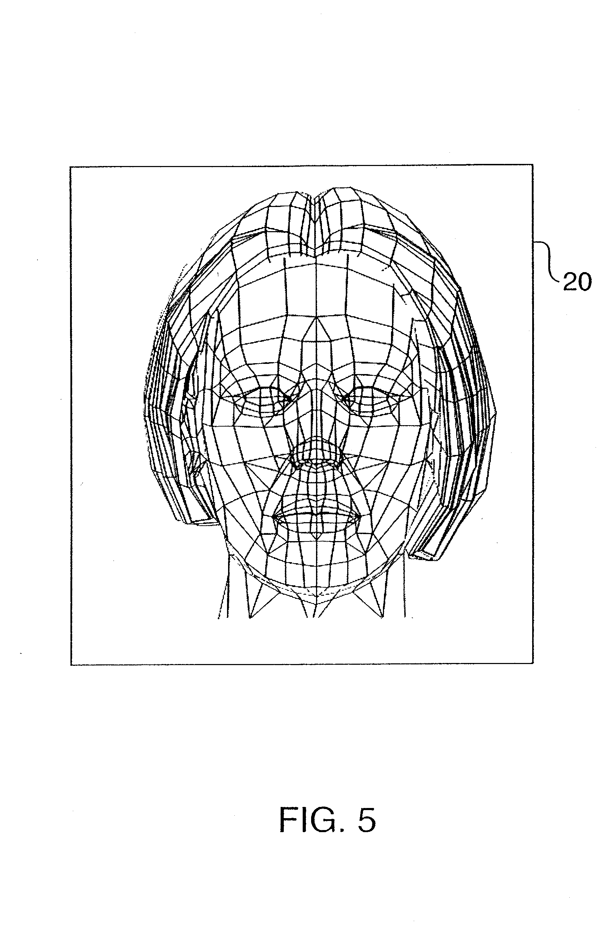

Figure 5 illustrates a wire frame model of image model 20 used as a basis for modeling first portrait image 10. As illustrated in Figure 5, image model 20 may include a portrait model portion and a non-portrait model portion. For example, the portrait model portion may comprise the face and head whereas the non-portrait model portion may comprise shoulders, arms, or a background.

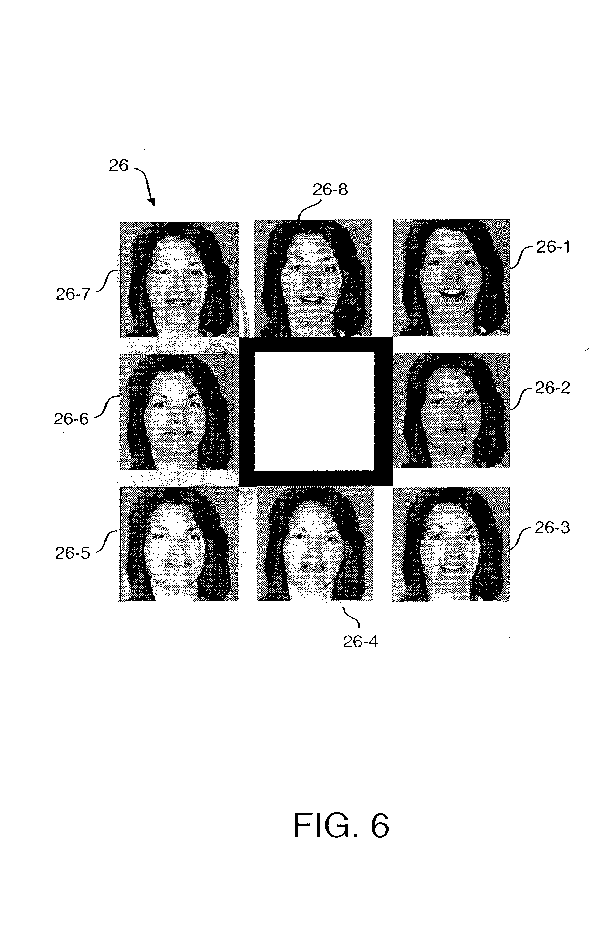

A plurality of pre-defined modifications is applied to the image model at step 104 to generate a plurality of modified portrait images, which are displayed at step 106. Figure 6 illustrates an example of a plurality of modified portrait images 26 which have been generated using image model 20. More particularly, Figure 6 shows eight modified portrait images 26-1 through 26-8. Each modified portrait image represents a modification in first portrait image 10. For Figure 6, each modified portrait image 26-1 through 26-8 provides a modification in expression. For example, modified portrait image 26-1 provides an expression of surprise, while modified portrait image 26-8 provides a calming expression. Some modifications in expression may be subtle and not easily discernable from another expression. Once displayed, a user can use an input device or indicator, such as a stylus, keyboard, keypad, touch to a touchscreen display, or the like, to select one of the modified portrait images.

The modified portrait images can be retrieved from an existing database which was previously cataloged. For example, for the particular example wherein the modified portrait images are expressions, the expressions can be retrieved from an existing database which was generated and stored, either locally or remotely.

Modified portrait images 26 can be provided and displayed by image capture device 14 if image capture device includes an image processing unit. Image producing kiosk 16 could also generate and display modified portrait images 26. Alternatively, modified portrait images 26 could be generated by at least one personal computer 22, by network of computers 24, using the internet or a communication network, or the like.

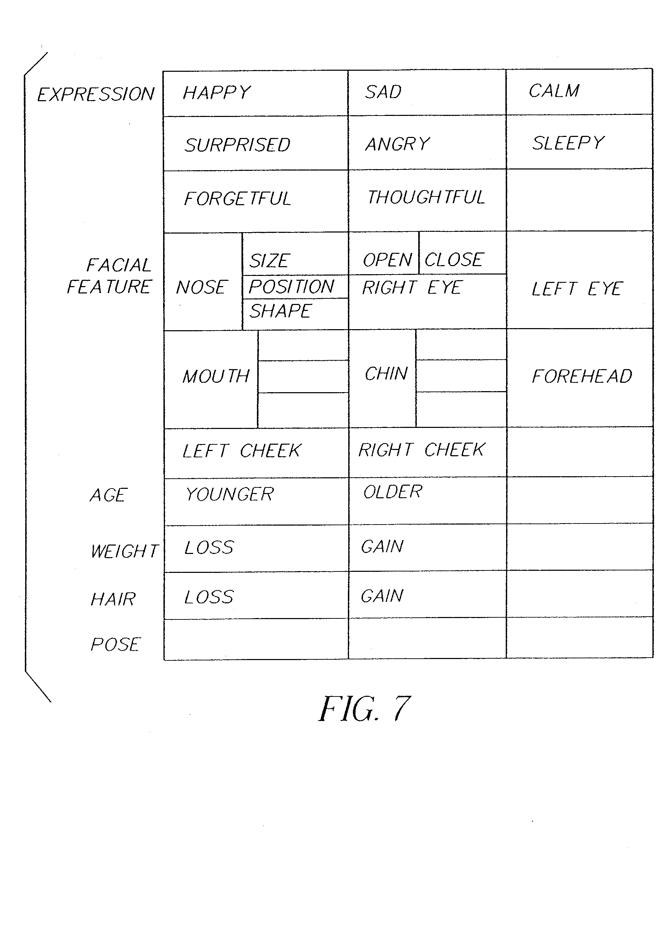

Alternatively, one or more pre-defined modifications can be displayed for selection by a user. That is, to identify the pre-defined modifications which are to be applied to the image model, a user might use an input device, such as a stylus, keyboard, keypad, touchscreen, or the like, to select one or more pre-defined modifications. An example of a list of pre-defined modifications which could be displayed to the user is shown in Figure 7. For example, it might be desired to modify first portrait image 10 to show anger. Accordingly, "anger" would be selected and one or more modified portrait images representative of anger would be generated and displayed. Alternatively, the pre-defined modifications might be a random set of pre-defined modifications, or a standard set/collection. For the particular example shown in Figure 6, the eight modified portrait images 26-1 through 26-8 might represent expressions from happiness to anger.

The pre-defined modifications can be stored in a database. For example, a generic set of modifications (i.e., parameters) comprised of a variety of expressions might be defined in a particular database. Or, a user may identify favorite personal expressions and store these favorites for later use in modifying a portrait image. Then, when selected by a user, the set of pre-defined modifications can be applied to an image model to generate modified portrait image(s). For example, the parameters of a happy expression may be stored and retrieved to be mapped/applied to first portrait image 10.

Alternatively, modified portrait images 26 can be stored in a database. For example, a generic set of modified portrait images (i.e., parameters) comprised of a variety of expressions might be defined in a particular database. Or, a user may identify favorite personal modified portrait images and store these favorites for later use in modifying a portrait image. Then, when selected by a user, the set of modified portrait images can be recalled. In one embodiment, the modified portrait images are stored as a reference 2.5-dimensional or 3-dimensional model that can be applied to a new portrait image when a new 2.5-dimensional or 3-dimensional image model is generated from a new portrait image.

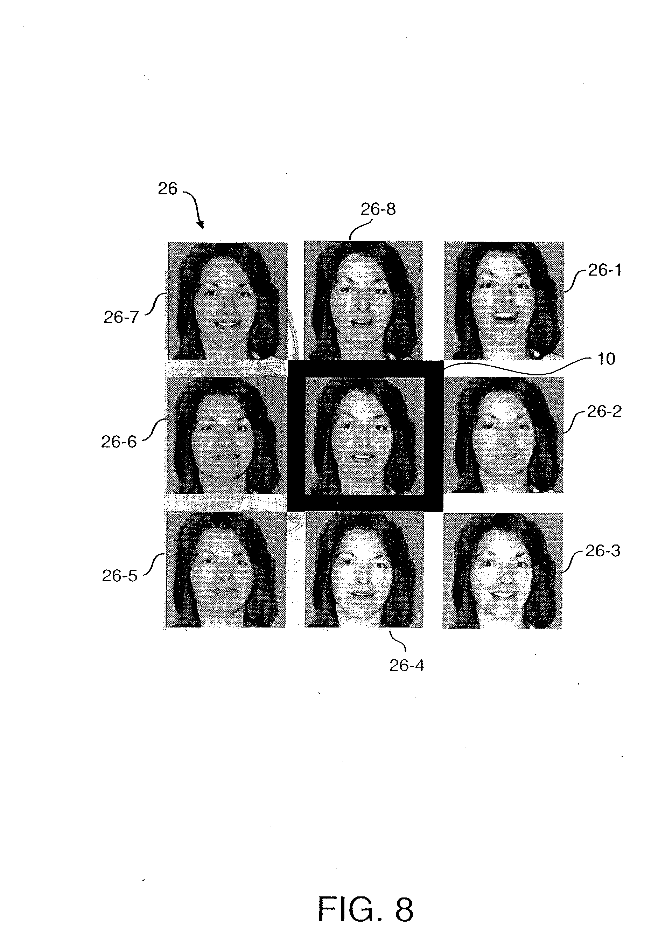

Once generated, the modified portrait images can be displayed in various arrangements. A preferred arrangement is illustrated in Figure 8, and referred to as a ring-around approach. In the ring-around approach, the eight modified portrait images (i.e., 26-1 through 26-8) are arranged to surround first portrait image 10, which is disposed in the center. Thus, the pre-defined portrait modifications form a ring around first portrait image 10. Such an arrangement is preferred since it allows a user to readily compare first portrait image 10 with each of the modified portrait images 26-1 through 26-8.

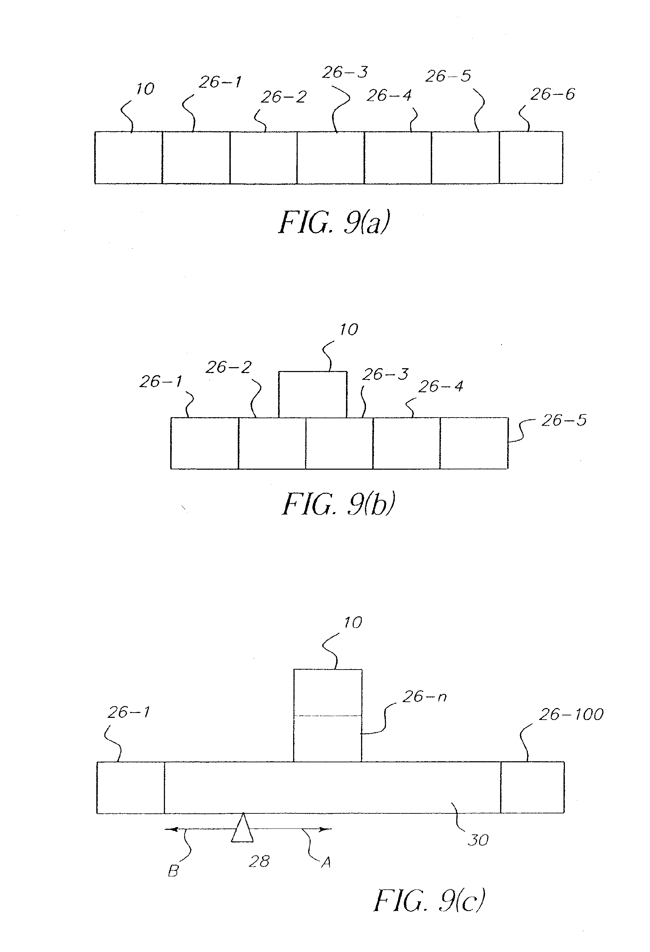

Other arrangements for displaying the plurality of modified portrait images 26 may be known to those skilled in the art. For example, as illustrated in Figure 9(a), first portrait image 10 is disposed in a serial arrangement with 6-modified portrait images 26-1 through 26-6. In Figure 9(b), first portrait image 10 is disposed adjacent to 5 linearly arranged modified portrait images 26-1 through 26-65. Figure 9(c) shows a slider 28 adapted to move between two ends of a sliding scale 30, in a direction noted by arrows A and B, to display a continuum of 100 modified portrait images. For the particular example, continuum ranges from modified portrait image 26-1 to modified portrait image 26-100, with n being an integer value from 1 to 100. The indicated modified portrait image 26-n would be displayed instantaneously as slider 28 is moved along slider scale 30.

Further, different portions of the face (e.g., eyes, nose, and mouth) can be modified with different levels for each portion. Still further, different matrices can be set up for modification (e.g., emotion vs. degree, expression vs. degree), addition of objects (e.g., hats, jewelry, etc). The arrangements described above (i.e., ring-a-round arrangement) can be employed.

The modified portrait image(s) can be refined. That is, if the selected modified portrait image is not acceptable to the user, additional or further modified portrait images can be selected. For example, if modified portrait image 26-1 is selected (showing surprise) but this "level" of surprise is not acceptable to the user, additional modifications showing various "levels" of surprise may be displayed for the user's perusal and potential selection.

Once the plurality of modified portrait images are displayed, one of the plurality of modified portrait images is selected at step 108 using an indicator or other input device known to those skilled in the art, such as a keyboard, touchscreen or the like. Other means and methods of selecting the one may be known to those skilled in the art.

At step 110, the selected modified portrait image is displayed, transferred, stored, or printed.

At step 104, the pre-defined modifications) are mapped to the image model of the portrait image generated in step 102 to generate a modified portrait image. For example, referring again to Figure 7, if a user selects a pre-defined modification of "happy", at step 104, the pre-defined modification is mapped/applied to image model 20 to generate a modified portrait image as shown in Figure 6 as modified portrait image 26-1. That is, the facial elements are aligned to the image model. The modified portrait image can then be utilized as desired, including displaying on a screen (e.g., a digital camera, computer, kiosk, or the like), transferring electronically (e.g., from a digital camera to a personal computer), storing for later displaying, or printing.

The mapping/application to generate the modified portrait image can be accomplished by an image processing unit in image capture device 14, image producing kiosk 16, personal computer 22, network of computers 24, or the like.

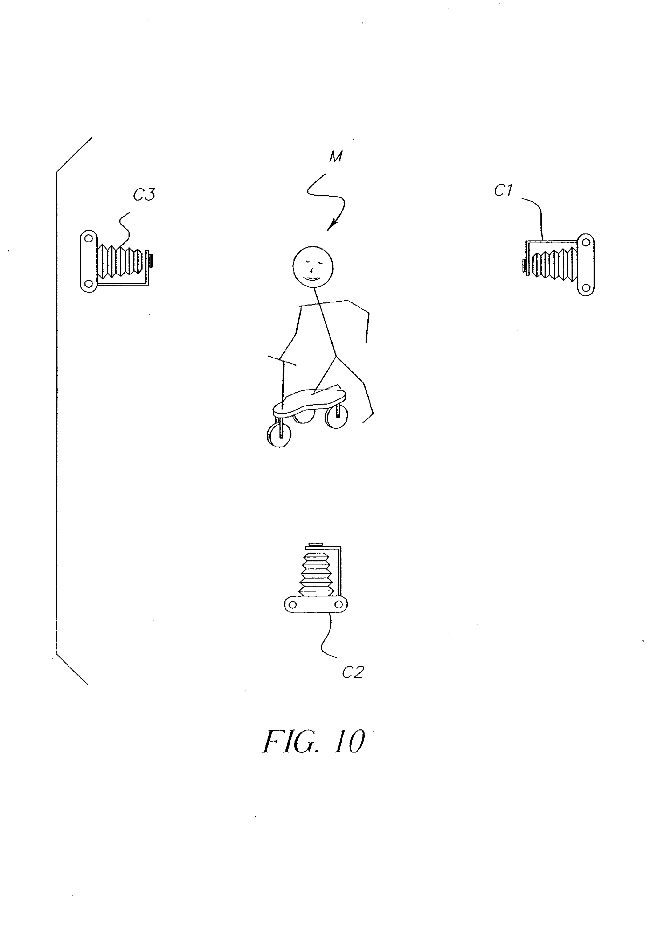

As disclosed above, a 2.5 dimensional model of the portrait image is generated at step 102 when a portrait image is provided at step 100. However, if a plurality of portrait images is provided, a 3-dimensional model can be generated. Referring now to Figure 10, a series of cameras C1, C2, and C3 can be arranged with known lighting conditions to capture images of a model M. One skilled in the art of photography or lighting can set up proper lighting conditions. More than three cameras can be used to capture more detail or for capturing multiple subjects at the same time. The plurality of portrait images can be taken simultaneously or in a controlled sequence.

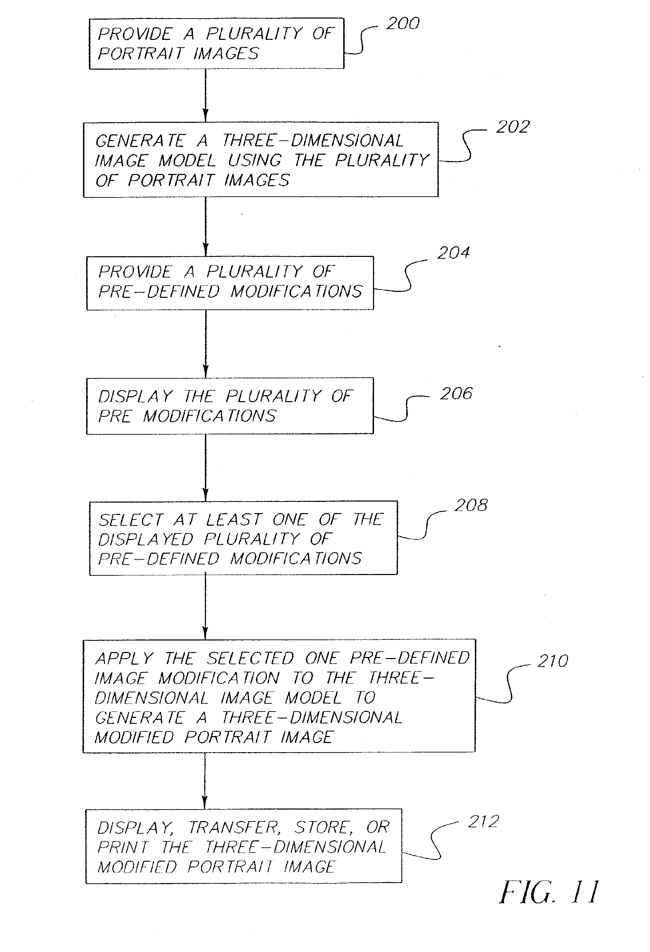

A flow diagram of a method in accordance with a second embodiment of the present invention is shown in Figure 11, wherein a plurality of portrait images are collected, for example using the arrangement shown in Figure 10. A plurality of portrait images is provided at step 200. A three-dimensional image model is generated using the plurality of portrait images (step 202). A plurality of pre-defined modifications is provided (step 204) and displayed (step 206). At least one of the displayed plurality of pre-defined modifications is selected using an indicator or other input device (step 208). At step 210, the selected one pre-defined modification is mapped to the three-dimensional image model to generate a three-dimensional modified portrait image. The three-dimensional modified portrait image can be displayed, transferred, stored, or printed (step 212).

The generation of the 3-dimensional model using the plurality of portrait images can be accomplished using known techniques, as disclosed above with regard to the generation of the 2.5 dimensional image model.

As indicated in Figures 1 and 11, the generated modified portrait image may be displayed, transferred, stored, or printed (step 110 and 212, respectively). However, the modified portrait image that was generated may not be acceptable to the user. Accordingly, the user may desire to refine the modified portrait image further. For example, the model generator used to generate the image model at step 102 may have been a rough/quick model generator. As such, it may be preferred to utilized further features (or a different) model generator to refine the modified portrait image.

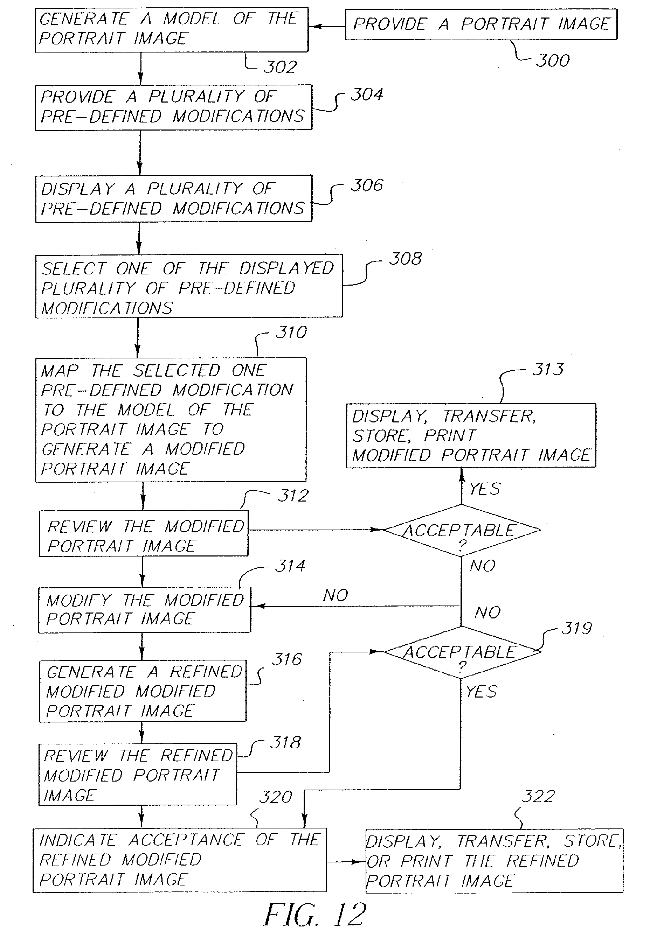

A flow diagram of a method in accordance with a third embodiment of the present invention is shown in Figure 12, wherein the modified portrait image(s) generated (at step 104 or 210) is refined. As shown in Figure 12, at step 300, a digital still image of the portrait image is provided. An image model of the portrait image is then generated (step 302). A plurality of pre-defined modifications is provided (step 304) and displayed (step 306). At least one of the displayed plurality of pre-defined modifications is selected (step 308), and then mapped to the image model of the portrait image to generate a modified portrait image (step 310).

It is recognized that, rather than providing a plurality of pre-defined modifications from which to select to generate the modified portrait image, a plurality of modified portrait images can be retrieved from an existing database, as described earlier. As such, steps 304 through 310 can be accomplished by retrieving a plurality of modified portrait images from which to select.

At step 312, the modified portrait image is reviewed by the user to determine its acceptability. If acceptable, the modified portrait image can be displayed, transferred, stored, or printed (step 313). If not acceptable to the user, the modified portrait image can modified at step 314, and a refined modified portrait image is generated (step 316) and reviewed (step 318). If the refined modified portrait image is acceptable to the user at review (step 319), the user can indicate acceptance of the refined modified portrait image (step 320), and display, transfer, store, or print the refined modified portrait image (step 322). If the refined modified portrait image is not acceptable to the user at review (step 319), the user may repeat steps 314-318 to until an acceptable portrait image is obtained.

In one embodiment, the pre-defined modifications which are displayed for generating the refined modified portrait image are a series of modifications ranging between the portrait image and the modified portrait image. That is, the pre-defined modifications which are displayed are generated by a processing unit to vary between two predetermined settings/ranges/extremes, for the particular example, the portrait image and the modified portrait image. As such, the pre-defined modifications are automatically and systematically generated by a processing unit knowing the first and last predetermined modifications. Other predetermined settings could be defined.

Image 12 has been described as having a single portrait image 10. However, the present invention can be employed wherein a plurality of individuals/persons are present in digital still image 12. More particularly, it may be desired to modify the expression of at least one of the individuals in the image. Though, the portrait image of more than one individuals/persons in the image can be acted on.

It is recognized that once an acceptable modified portrait image is selected by the user, the modified portrait image can be "inserted" into the digital still image to "replace" the original portrait image. Techniques for digitally replacing/exchanging the original portrait image with the modified portrait image are known to those skilled in the art, for example, Adobe Photoshop.

It is understood that the present invention employs the generation of individual image models of portraits. These image models need to have the capability of producing visually pleasing/appealing facial expressions. In general, facial modeling and animation can be accomplished by at least three approaches: 3D mesh based geometry deformation, 2D mesh and warping techniques, and sample based techniques which employ multiple images.

In a typical 3D approach, an image model is prepared by deforming a generic 3D mesh, which corresponds to a facial model, in a preprocessing step. In "Synthesizing Realistic Facial Expressions from Photographs", by Pighin et al, SIGGRAPH 98, Computer Graphics Proceedings, Annual Conference Series, 1998, Pages 75-83, a method is described which employs multiple photographs to deform a generic 3D mesh to fit the geometry of the face. A subset of the mesh nodes is located on specific facial features and contours (e.g., eyes, nose, mouth boundary, and the like) which are important for fitting and animating the mesh. The 3D mesh model can then be animated by displacing the mesh vertices based upon specific rules. Two useful methods that can each be used for displacing the mesh vertices, are physical based muscle models and empirical models derived from tracking markers placed on a person's face. A muscle based approach is described in Lee et al, "A muscle model for animating three-dimensional facial expression", Computer Graphics (SIGGRAPH 1998), pp. 56-66, August 1998. Photorealism is obtained by texture mapping one or more images of the individual face onto the 3D mesh in Lee et al, "Realistic face modeling and animation", Computer Graphics (SIGGRAPH 1995), pp.55-62, August 1995.

In a typical 2D approach, a person-specific model is prepared by aligning a 2D mesh or control points with specific facial features and contours on an image of a person's face. By specifying new locations for the control points, which correspond to locations the control points would assume in an expression modified image, the 2D model can be animated by and using the source and destination control points to warp the image. In Arad et al, "Image Warping By Radial Basis Functions: Applications to Facial Expressions", CVGIP: Graphical Models and Image Processing, Vol. 56, No. 2, March 1994, pp. 161-172, 2D warping is used to modify facial expressions.

In a typical sample based approach, parts of the face (e.g., mouth, eyes, and eyebrows) are extracted from multiple images and are recombined to generate a talking face or a face with a different expression. In Cosatto et al, "Sample-Based Synthesis of PhotoRealistic Talking Heads", In the proceeding of Computer Animation, pp. 103-110, 1998, facial features of a person talking in a video clip are extracted and then used to synthesize a clip of the person uttering text.

An advantage of a 3D head model is that it is suitable to have arbitrary motion and rotation.

An important step for each of the aforementioned techniques is the location of the control points necessary for model construction and subsequent facial expression modification. The more accurately these points are located on the face, the more realistic the resulting facial expression will be. Typically these control points are either manually located or automatically located using image processing techniques such as the active shape model. The active shape model is described in Lanitis et al, "Automatic interpretation and coding of face images using flexible models", IEEE Trans. on PAMI, Vol. 19, No. 7, pp. 743-756, 1997.

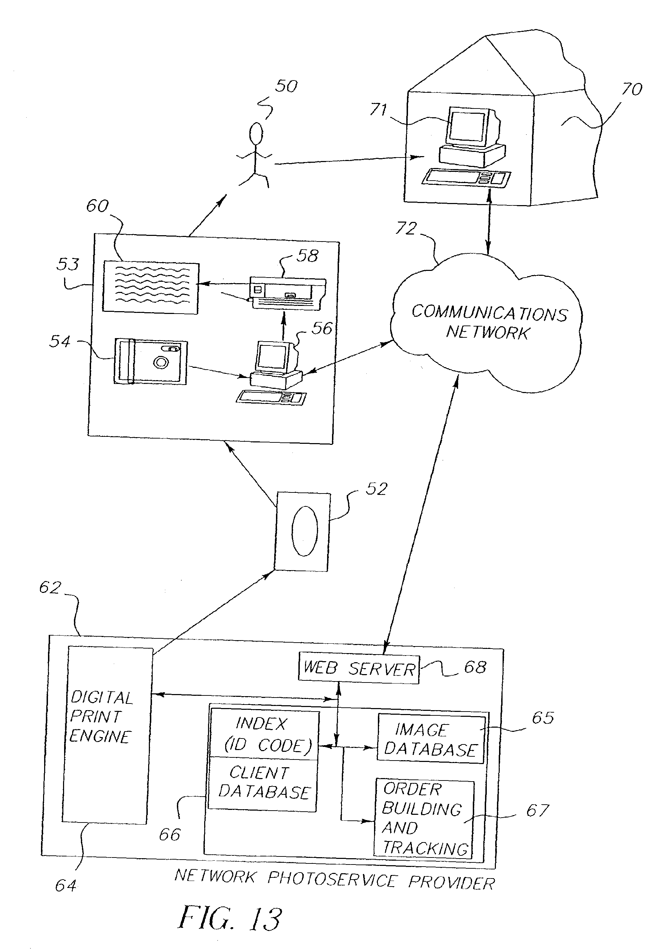

Another embodiment of the present invention is generally illustrated in Figure 13. As illustrated, a user 50 desires to modify a portrait image (not shown) which has been digitally captured. For the example shown in Figure 13, the portrait image 52 has been captured at a professional studio 53 (or the like) using known methods. For example, the portrait image 52 can be captured either using a digital camera 54 wherein the digital file of the captured portrait image is electronically transferred to a computer 56, or using photosensitive media and scanned using a scanner (not shown) to generate the digital file of the portrait image.

Associated with the digital file of the portrait image is an identifier 60. Identifier 60 can include user information (e.g., name, address), information related to the image such as the date and time the image was taken, a random number, information about the studio/location at which the portrait image was taken. Those skilled in the art will recognize further information that can be included with identifier 60. For the example shown in Figure 13, identifier 60 includes an id number, shown as ID#123456. Identifier 60 can be provided to user 50 from a printer 58 operably connected to computer 56.

The digital file of the portrait image is transferred to a network service provider 62, such as a wholesale photofinishing lab, retail location, on-line provider, internet provider or the like. Transfer to service provider 62 can be accomplished by transmitting the digital file of the portrait image over a communication network or by physical transport of a removable media (such as a floppy disk, memory card or CD) comprising the digital file of the portrait image.

Once the digital file of the portrait image is received by service provider 62, the digital file of the portrait image can be processed using a computer 66 to produce a first set of modified digital portrait images which are stored within, for example but not by way of limitation, an image database 65. From a remote location 70, user 50 can access the first set of modified digital portrait images stored in image database 65 by using information provided on identifier 60. Once user 50 has selected a preferred modified digital portrait image, computer 65 initiates an order building and tracking block 67 and causes a hardcopy print 52 of the selected preferred modified digital portrait image to be printed on a printer 64. Printer 64 can be any number of known printers, such as digital printers commonly available to print on silver halide, thermal, inkjet or any other type of media that user 50 prefers. Hardcopy print 52 of the preferred modified digital portrait image is then delivered to professional studio 53 where user 50 returns to obtain their order.

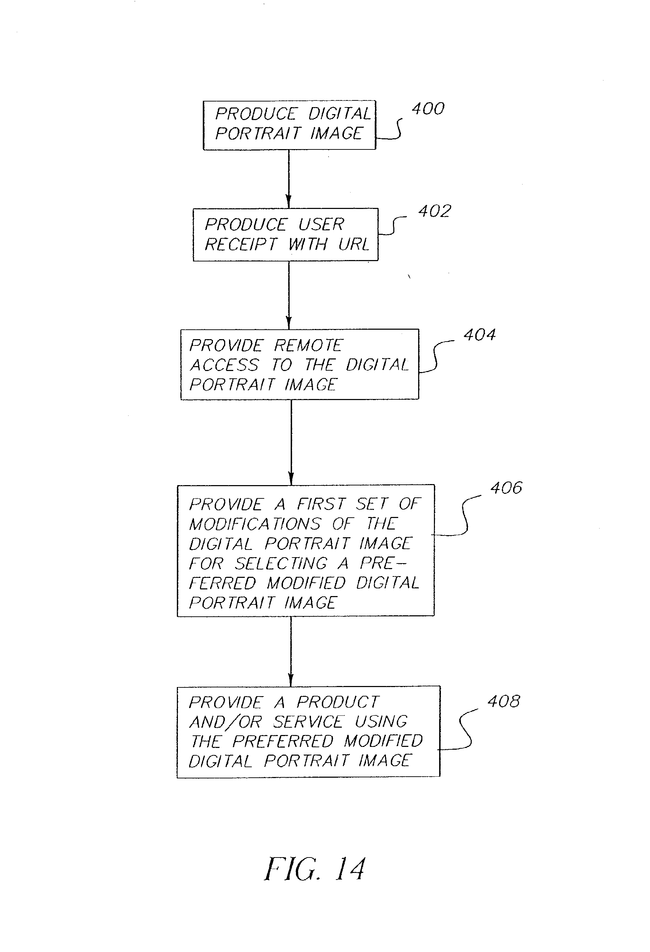

Figure 14 shows a flow diagram, which more particularly describes the embodiment shown in Figure 13. At step 400, the digital file of the portrait image is generated. At step 402, user 50 obtains identifier 60 associated with the digital file of the portrait image, and a website or web location associated with web server 68 is provided to user 50. User 50 is also provided with remote access to web server 68 by means of communication network 72 so that user 50 can access the digital file of the portrait image from remote location 70 (step 404). At step 406, user 50 accesses the digital file of the portrait image and if a modification to the digital file of the portrait image is desired, user 50 is provided with a set/series of modifications from which to select and generate a modified portrait image in accordance with Figures 1-12 described above. Once user 50 has accepted a modified portrait image, the modified portrait image "replaces" the portrait image of the digital still image to generate a "new" digital still image, and a product or service is provided to user using the "new" digital still image (step 408). For example, user 50 may desire a 8x10 print of the "new" digital still image, or may desire to have the "new" image sent to his/her home on a CD.

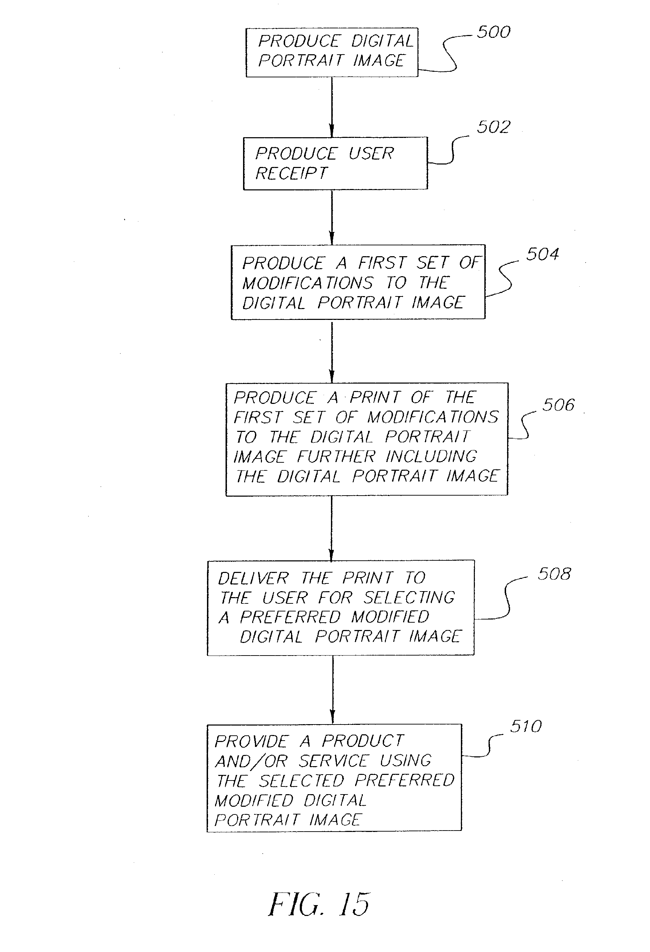

In some situations, user 50 may not have access to a computer disposed at remote location 70. For example, user 50 does not own a home computer or does not desire to use a computer disposed at a retail location. Accordingly, Figure 15 provides a flow diagram of a method in accordance with the present invention which is suitable for such situations. At step 500, a digital file of the portrait image is generated. At step 502, user 50 obtains identifier 60 as a hardcopy receipt associated with the digital file of the portrait image. At steps 504 and 506, a set/series of modified portrait images in accordance with Figures 1-12 described above are generated in hardcopy form (i.e., a print). At step 508, the prints are provided to user 50, for example, by the user 50 physically picking up the prints at a retail location, or by delivering of the prints to user 50, such as by U.S. mail. User 50 indicates the selection of at least one of the modified portrait images, wherein a product or service using the selected modified portrait image is generated for user 50.

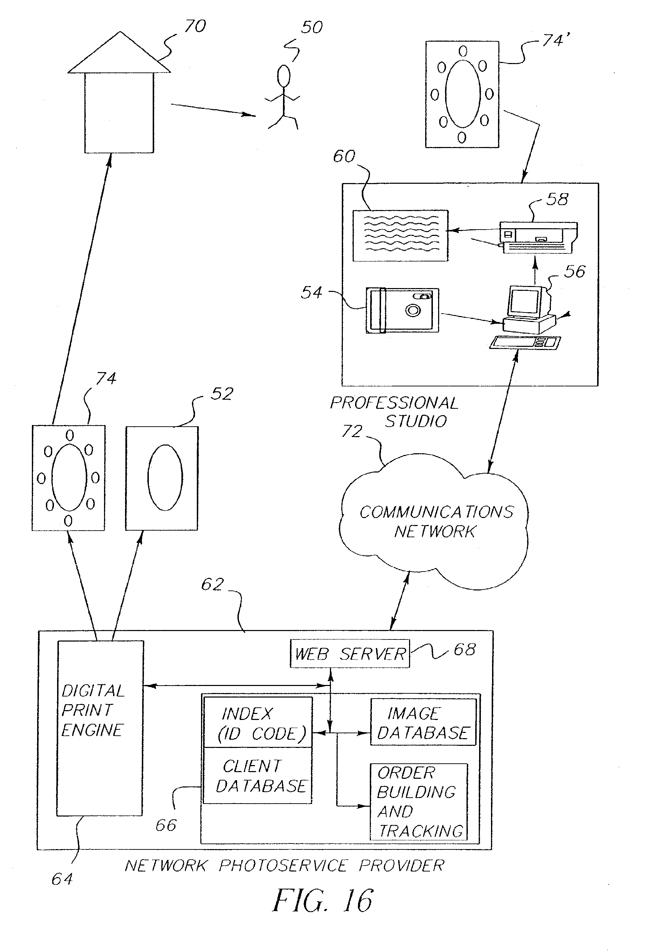

Figure 16 shows a schematic generally illustrating the method of Figure 15. As illustrated, a hardcopy or print 74 of a set/series of modified portrait images is generated by printer 64. As shown in Figure 16, a plurality of modified portrait images are shown in a ring-around arrangement on print 74. Print 74 is delivered to user 50 at remote location 70, which is shown in Figure 16 as a home 70. User 50 then provides instructions as to how to proceed. Such instructions can include marking print 74 thereby generating a modified print 74', as shown in Figure 16 by an "x" across the selected modified portrait image. Other methods of providing instructions are known to those skilled in the art, for example, completing a form, calling, or writing out instructions. User 50 also indicates the desired product and/or service (i.e., size and quantity of prints, upload to on-line account, CD, floppy disk, tee-shirt, and the like). User 50 sends or delivers the modified print 74' with instructions, thereafter, the product/service is generated in accordance with the user's instructions and provided to the user.

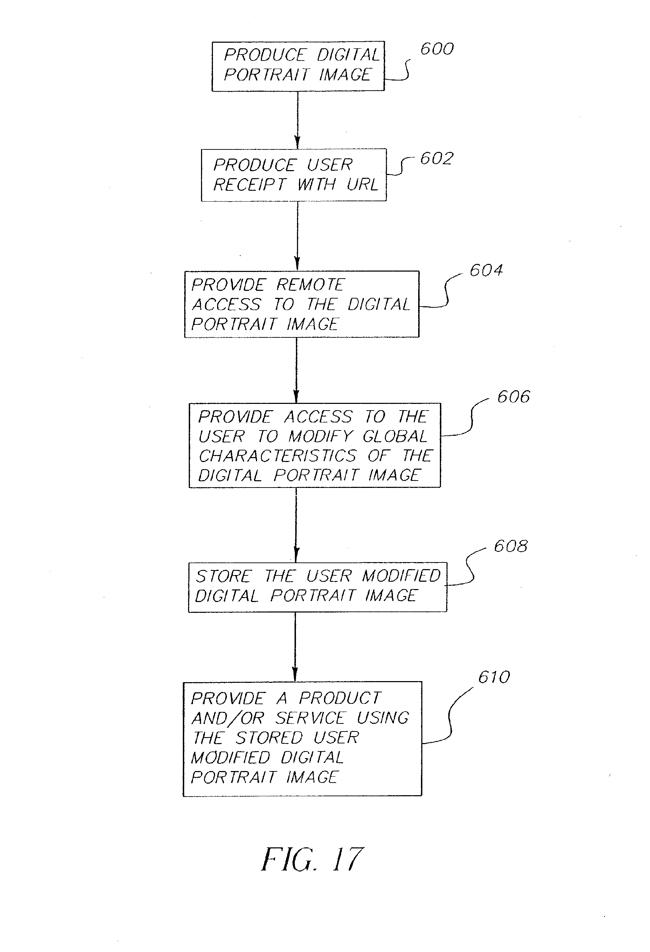

Figure 17 shows a flow diagram of a further embodiment in accordance with the present invention. At step 600, a digital file of the portrait image is generated. At step 602, user 50 obtains identifier 60 (as a hardcopy receipt produced by printer 58) associated with the digital file of the portrait image, and a website or web address associated with web server 68 is provided to user 50. User 50 is provided with remote access to web server 68 by means of communication network 72 so that user 50 can access the digital file of the portrait image from remote location 70 (step 604). At step 606, user 50 accesses the digital file of the portrait image, and is able to modify global characteristics of portrait image. That is, characteristics directed to the image as whole package may be modified, for example, the background color may be changed. Sometimes the color/theme choices available in the studio are not a good match with the clothes worn by the subjects. School portraits are an example of this. As such, after reviewing the portrait image, it may be desirable to change the background. Once user 50 has achieved an acceptable modified portrait image, the modified portrait image is stored (step 608) and product/services can be ordered (step 610). Furthermore, a user could choose his/her own background from a personal digital image or a stock digital image. Chroma-key technology could be employed if desired, but need not be. Then, the background can be selected later using the ring-around arrangement (as shown in Figure 8) for basic colored backgrounds or from a personal scenic image. The advantage is that the studio can print out a quick ink jet print to show what the final print is going to look like. Using the ring-around arrangement, the user can choose the exact color hue to provide a pleasing image (i.e., a color that matches clothing or skin tones) based on the display or the ink jet proof print. A hardcopy print of the final portrait image is produced digitally on a better quality color printer like a thermal printer or a digital silver-halide printer.

The method of the present invention can be applied to other characteristics, such as hair color. It may be desirable obtain a particular tint color and/or tint volume necessary to produce the particular tint color. First, a portrait image is captured. Then, the hair is identified either automatically or manually and a customer picks a basic color. The software preferably produces a ring-around arrangement based on an initial starting point where only the hair color is modified. The user can further modify the hair color by selecting different tints to see the effects of changing all of the hair (with respect to the face) as compared to holding up a small color swatch and looking in a mirror. In addition, with a good display (for example, 16 million colors), the user can detect fine differences in shading within a given hue. Successive ring-arounds allow the user to hone-in on the most pleasing hue. Selected modified portrait images can be printed or shown on a display. If printed at a remote location, the hardcopy print can be mailed to the user. The display can be located in a retail location (e.g., a hair salon) or can be a personal computer located in a home environment communicating over a communications network to a website running the software for ring-arounds. When the user chooses a hair color that is acceptable, the user can desire to know exactly how to make it (i.e., what colors to mix). A mixing guide can be provided to the user, or the mixture can be prepared remotely and sent to the user in the necessary quantity.

It is understood that a kiosk can be employed to capture a portrait image wherein the face/head placement is controlled/pre-determined. With such a kiosk, the user can operate the kiosk to generate a ring-around hardcopy print with the selected expression modifications. The hardcopy print could be a post card or a print. The output product of the kiosk could be the hardcopy print.

## Claims

1. A method of modifying a portrait image, comprising the steps of:
providing a digital still image comprising the portrait image;
generating an image model of the portrait image;
providing a plurality of modified portrait images generated by applying a plurality of pre-defined modifications to the image model;
displaying the plurality of modified portrait images;
providing an indicator for selecting at least one of the plurality of displayed modified portrait images; and
displaying, transferring, storing, or printing the at least one selected modified portrait image.

2. The method of Claim 1, further comprising the step of replacing the portrait image of the digital still image with the at least one selected modified portrait image to generate a modified digital still image.

3. The method of Claim 1, wherein the step of providing the plurality of modified portrait images is accomplished by:
providing the plurality of pre-defined modifications, and
individually applying each of the plurality of pre-defined modifications to the image model to generate the plurality of modified portrait images.

4. The method of Claim 1, wherein the step of displaying the plurality of modified portrait images comprises a ring-around arrangement wherein the plurality of modified portrait images are disposed around the portrait image.

5. The method of Claim 1, further comprising the steps of:
displaying the at least one selected modified portrait image;
indicating acceptance of the at least one selected modified portrait image; and
replacing the portrait image of the digital still image with the at least one selected modified portrait image to generate a modified digital still image.

6. A method of modifying a portrait image, comprising the steps of:
providing a digital still image comprising the portrait image;
generating an image model of the portrait image;
providing a plurality of pre-defined modifications;
providing a selection indicator for indicating the selection of at least one of the plurality of pre-defined modifications;
applying the selected at least one pre-defined modification to the image model to generate a modified portrait image; and
displaying, transferring, storing, or printing the modified portrait image.

7. A method of processing a digital still image, comprising the steps of:
providing a digital still image comprising the portrait image;
generating a hardcopy output comprising the portrait image and a plurality of candidate modified portrait images generated using an image model of the portrait image;
providing the hardcopy output to a user;
accepting instructions from the user representative of acceptance of at least one of the plurality of candidate modified portrait images; and
generating a modified digital still image comprising the accepted at least one of the plurality of candidate modified portrait images.

8. A method of processing a digital still image, comprising the steps of:
capturing, at a predetermined location, a digital still image comprising the portrait image;
displaying to a user, on a display located at the predetermined location, the portrait image disposed proximately to a plurality of candidate modified portrait images generated using an image model of the portrait image;
accepting instructions from the user representative of selection of at least one of the plurality of candidate modified portrait images;
generating a modified digital still image comprising the accepted at least one of the plurality of candidate modified portrait images; and
providing the modified digital still image to the user.

9. A method of processing a digital still image, comprising the steps of:
capturing, at a predetermined location, a digital still image comprising the portrait image;
providing a user with an identifier associated with the portrait image;
accessing the portrait image with the associated identifier using a display located at a second location remote from the predetermined location;
displaying to a user, on the display, the portrait image disposed proximate a plurality of candidate modified portrait images generated using an image model of the portrait image;
accepting instructions from the user representative of a selection of at least one of the plurality of candidate modified portrait images;
generating a modified digital still image comprising the accepted at least one of the plurality of candidate modified portrait images; and
providing the modified digital still image to the user.

10. A method of processing a digital still image, comprising the steps of:
capturing, at a predetermined location, a digital still image comprising the portrait image;
providing a user with an identifier associated with the portrait image;
accessing, at a second location remote from the predetermined location, the portrait image with the associated identifier using an imaging device;
transferring a digital file of the portrait image to the imaging device;
using software disposed on the imaging device to generate a plurality of candidate modified portrait images;
displaying, using the imaging device, the portrait image disposed proximately to the plurality of candidate modified portrait images;
accepting instructions representative of a selection of at least one of the plurality of candidate modified portrait images; and
generating a modified digital still image comprising the accepted at least one of the plurality of candidate modified portrait images.
